# FASCICULE DE BREVET EUROPEEN

(11) **EP 4 351 929 B1**
(45) Date de publication et mention de la délivrance du brevet: **19.11.2025**
(21) Numéro de dépôt: 22732241.9
(22) Date de dépôt: 09.06.2022
(51) Int. Cl.: B60R 11/04, B60R 11/00

(54) **SUPPORT AJUSTABLE POUR LA FIXATION DE COMPOSANTS ÉLECTRONIQUES ET/OU MÉCANIQUES SUR UN PAREBRISE D'UN VÉHICULE**
VERSTELLBARE HALTERUNG ZUR BEFESTIGUNG VON ELEKTRONISCHEN UND/ODER MECHANISCHEN KOMPONENTEN AUF EINER FAHRZEUGSCHEIBE
ADJUSTABLE BRACKET FOR ATTACHING ELECTRONIC AND/OR MECHANICAL COMPONENTS TO A VEHICLE WINDSCREEN

(30) Priorité: 11.06.2021 FR 2106168
(43) Date de publication de la demande: 17.04.2024
(73) Titulaire: Saint-Gobain Sekurit France, 60150 Thourotte (FR)
(72) Inventeur: SILVESTRINI, Laurent, 60400 BUSSY (FR); BONHOMME, Mickaël, 60150 LE PLESSIS-BRION (FR); SEELEY, Justine, 75018 PARIS (FR)
(74) Mandataire: Saint-Gobain Recherche
(86) Numéro de dépôt international: PCT/EP2022/065749
(87) Numéro de publication internationale: WO 2022/258776

(56) Documents cités:
- EP-A1- 2 979 929
- WO-A1-2013/070158
- DE-A1- 10 354 458
- DE-A1- 102010 008 215

## Description

### Domaine technique

L'invention concerne un support ajustable pour la fixation de composants électroniques et/ou mécaniques sur un parebrise d'un véhicule.

### Arrière-plan technique

Il est courant dans l'industrie automobile d'utiliser des supports de parebrise pour la fixation de composants mécaniques et/ou électroniques, tels que capteurs et/ou caméras, sur le parebrise d'un véhicule. La conception de ces supports varie selon la forme, la position et l'angle d'orientation du parebrise sur lequel ils sont montés, ainsi que selon les exigences techniques des composants mécaniques et/ou électroniques qu'ils supportent.

Ces supports de fixation sont généralement ajustables de manière à pouvoir les adapter plus facilement aux différentes configurations de parebrise et/ou aux différents types de composants mécaniques et/ou électroniques. Ce caractère ajustable permet notamment une certaine liberté dans le choix dans l'angle d'inclinaison des composants mécaniques et/ou électroniques par rapport au parebrise afin que ces composants puissent être orientés selon l'angle prescrit pour leur fonctionnement correct.

Par exemple, dans un véhicule automobile, pour un fonctionnement optimal d'un système d'aide à la conduite fixé sur un parebrise et comprenant une caméra et/ou un capteur, cette caméra et/ou ce capteur peuvent devoir être disposés selon un axe horizontal par rapport au châssis du véhicule.

Les parebrises ayant généralement une certaine inclinaison par rapport au châssis, il peut alors être nécessaire de compenser cette inclinaison afin d'assurer l'horizontalité. Le rôle de compensation angulaire est généralement dévolu au support de fixation. L'angle de compensation du support dépend généralement de la nature, de la forme, de la position et de l'angle d'inclinaison du parebrise par rapport au véhicule sur lequel il est assemblé.

DE10 2010 008 215 A1 [DAIMLER AG [DE]] 16.09.2010, qui correspond au préambule de la revendication 1, décrit un support ajustable comprenant un premier élément destiné à être fixé sur un parebrise, un deuxième élément mobile connecté au premier élément de manière rotative, et une glissière munie d'une vis de serrage pour l'ajustement de l'angle d'inclinaison du deuxième élément par rapport au premier.

WO 2013/070158 A1 [SCANIA CV AB [SE]] 16.05.2013 décrit un support ajustable comprenant un premier élément destiné à être fixé sur un parebrise, un deuxième élément mobile connecté au premier élément de manière rotative, un couvercle de protection et des cales pour l'ajustement de l'angle d'inclinaison du deuxième élément par rapport au premier.

EP 2 979 929 A1 [Continental Automotive GmbH [DE]] 03.02.2016 décrit également un support ajustable comprenant un premier élément destiné à être fixé sur un parebrise, un deuxième élément mobile connecté au premier élément de manière rotative, et des cales pour l'ajustement de l'angle d'inclinaison du deuxième élément par rapport au premier.

DE 103 54 458 [VALEO SCHALTER & SENSOREN GMBH] décrit un dispositif de support de capteur destiné à maintenir des capteurs de détection d'environnement sur des pièces de véhicule.

### Résumé de l'invention

### Problème technique

Un premier inconvénient des supports ajustables de l'état de la technique est que l'angle d'inclinaison ne peut être fixé qu'à l'aide de cales ou de glissières qui n'offrent qu'une liberté relativement limitée quant au choix de cet angle. En effet, l'angle d'inclinaison minimal ou maximal pouvant être atteint dépend de la course minimale ou maximale disponible des cales ou des glissières. Or, il peut y avoir un besoin de support davantage adaptatif, en particulier sur la valeur de l'angle d'inclinaison.

Un deuxième inconvénient est que les cales ou les glissières sont des éléments supplémentaires des supports. Or, il peut être avantageux, en termes de fabrication, d'avoir une solution de support plus simple avec notamment moins d'éléments impliqués dans leur assemblage et leurs fonctionnalités.

### Solution au problème technique

Il est fourni un support ajustable pour parebrise tel que décrit dans la revendication 1, les revendications dépendantes étant des modes avantageux de réalisation.

### Avantages de l'invention

Un premier avantage de l'invention est un support ajustable plus simple permettant un choix plus large d'angle d'inclinaison. L'angle d'inclinaison du support étant ajusté grâce à un lien mécanique entre un élément du support et le couvercle de protection, il est permis une plus grande liberté d'inclinaison du support par rapport au parebrise sur lequel il est susceptible d'être utilisé, notamment par le design du couvercle de protection. En un sens, le support selon l'invention présente une adaptabilité plus optimale par rapport aux supports disponibles dans l'état de la technique.

Un deuxième avantage est que la fabrication et le conditionnement du support sont simplifiés. En particulier, lors du conditionnement, les premier et deuxième éléments du support peuvent être agencés de sorte qu'ils assurent un encombrement géométrique très réduit, notamment plan. Un plus grand nombre de support peuvent alors être conditionnés dans un même espace aux fins de leur stockage et leur transport.

Un troisième avantage est que le support de fixation permet de réduire significativement le nombre de pièces nécessaires à fabriquer. En particulier, selon certains modes de réalisation, le support peut ne requérir que la fabrication de deux pièces, les deux éléments de support, d'une part, et le couvercle de protection, d'autre part.

### Brève description des dessins

[Fig. 1] est une projection orthogonale schématique d'un support ajustable selon un mode de réalisation.
[Fig. 2] est une projection orthogonale schématique des premier et deuxième éléments d'un support ajustable selon un mode de réalisation.
[Fig. 3] est une projection orthogonale schématique d'un couvercle de protection d'un support ajustable selon un mode de réalisation.
[Fig. 4] est une représentation schématique en section du support ajustable de la fig. 1.
[Fig. 5] est une projection orthogonale schématique, en position dépliée, des premier et deuxième éléments d'un support ajustable selon un autre mode de réalisation.

### Description détaillée de modes de réalisation

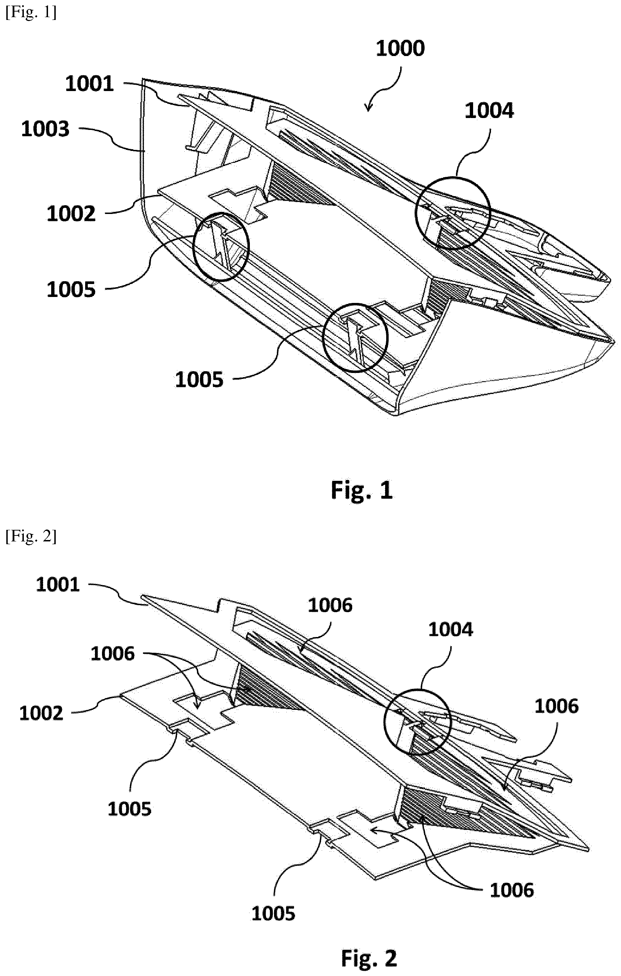

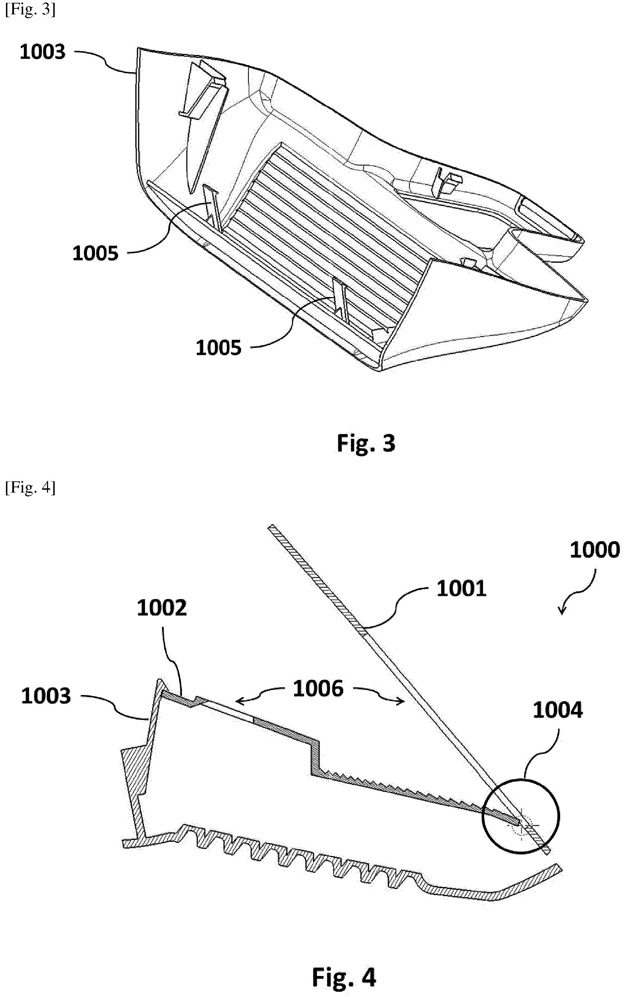

En référence aux fig. 1 à 4, dans un mode de réalisation, il est fourni un support ajustable 1000 pour la fixation de composants électroniques et/ou mécaniques sur un parebrise d'un véhicule. Le support ajustable 1000 comprend :
- une premier élément 1001 de support;
- un deuxième élément 1002 de support ;
- un couvercle 1003 de protection des premier et deuxième éléments 1001,1002 de support ;
   dans lequel,
- le premier élément 1001 de support est fixe,
- le deuxième élément 1002 de support est connecté au premier élément 1001 de support à l'aide d'une charnière 1004 configurée de manière à permettre la rotation du deuxième élément 1002 de support par rapport au premier élément 1001 de support ;
- le couvercle 1003 de protection et le deuxième élément 1002 de support comprennent respectivement des moyens 1005 de jonction complémentaires de sorte que, lorsque le couvercle 1003 de protection est fixé sur les premier et deuxième éléments 1001, 1002 de support, ces moyens 1005 de jonction permettent de former un angle relatif d'inclinaison entre le deuxième élément 1002 de support et le premier élément 1001 de support.

Les premier et deuxième éléments 1001, 1002 de support, ainsi que le couvercle 1003 de protection, peuvent être en toute matière adaptée. En particulier, ils peuvent être à base de matière thermoplastique, tel que le PVC, PC, PA66 et/ou ABS avec d'éventuelles charges. L'utilisation de matière thermoplastique a pour avantage de permettre la fabrication de tout ou partie du support à l'aide de procédés de moulage par injection.

Selon certains modes de réalisation, les premier et deuxième éléments 1001, 1002 de support, ainsi que le couvercle 1003 de protection, peuvent comprendre des éléments de renfort ou de contre-appui (non représentés). Ces éléments de renfort ou de contre-appui peuvent avantageusement permettre d'améliorer la résistance et la stabilité mécaniques du deuxième élément 1002 de support contre le couvercle 1003 de protection en fonction du type de composants électroniques et/ou mécaniques que le support ajustable 1000 est susceptible d'abriter. Ces éléments de renfort ou de contre-appui peuvent être en matière plastique et/ou métallique.

Les premier et deuxième éléments 1001, 1002 de support peuvent comprendre des particularités 1006 de design, tels qu'ouvertures, encoches, échancrures, nervures, flocage, texturation, afin de permettre, par exemple, le passage des connecteurs tels que câbles d'alimentation, et/ou des signaux nécessaires au fonctionnement desdits composants.

Au sens de l'invention, par « charnière » 1004, il est entendu tout moyen mécanique adapté permettant la rotation du deuxième élément de support par rapport au premier élément de support. A titre d'exemples, ce moyen peut une articulation centrale sous la forme d'un ensemble de fiches mobiles mâles femelles, comme illustré sur les figures, ou encore il peut être un axe rotatif formé par un système de pivots, éventuellement clipsables, disposés en vis-à-vis tel que décrit dans DE 10 2010 008 215 A1, WO 2013/070158 A ou EP 2 979 929 A1. D'autres formes de charnière sont possibles, notamment celles qui sont décrites ci-après dans certains modes avantageux de réalisation de l'invention.

Au sens de l'invention, par « couvercle de protection » 1003, il est entendu tout couvercle assurant une certaine protection des composants électroniques et/ou mécaniques, que le support ajustable est susceptible d'abriter, contre l'environnement extérieur. Il peut également avoir une fonction d'occultation desdits composants à la vue du conducteur et des passager d'un véhicule et/ou une fonction esthétique, notamment par sa forme, sa texture de surface et/ou sa couleur. Le couvercle peut être un couvercle plein, c'est-à-dire complètement fermé. Il peut aussi comprendre des parties ouvertes.

Selon l'invention, le couvercle 1003 de protection et le deuxième élément 1002 de support comprennent respectivement des moyens 1005 de jonction complémentaires de sorte que, lorsque le couvercle 1003 de protection est fixé sur les premier et deuxième éléments 1001, 1002 de support, ces moyens 1005 de jonction permettent de former un angle relatif d'inclinaison entre le deuxième élément 1002 de support et le premier élément 1001 de support.

Ces moyens 1005 de jonction peuvent être disposés sur les surfaces du couvercle 1003 de protection et du deuxième élément 1002 de support, respectivement en regard l'une de l'autre, comme illustré notamment sur les figures. Ils peuvent également être disposé en périphérie du deuxième élément de support et sur les surfaces latérales du couvercle de protection.

D'autres modes de réalisation sont particulièrement avantageux en ce qu'ils permettent d'utiliser le premier élément 1001 de support, le deuxième élément 1002 de support et la charnière 1004 avec à une très grande variété de couvercles de protection, seuls ces couvercles de protection nécessitent d'être adaptés quant à leur design à l'angle d'inclinaison recherché. En d'autres termes, un premier élément 1001 de support, un deuxième élément 1002 de support et une charnière 1004 peuvent être conçus de manière générique afin d'offrir une avantageuse facilité de réutilisation dans plusieurs applications nécessitant des angles d'inclinaison différents, le couvercle de protection étant quant à lui adapté à chaque application.

Selon des modes avantageux de réalisation, les moyens 1005 de jonction complémentaires peuvent être des moyens amovibles. Des moyens amovibles peuvent faciliter le retrait du couvercle 1003 de protection, notamment lorsqu'il est nécessaire de changer une pièce du support, tel que le couvercle lui-même et/ou un autre élément du support, et/ou un ou plusieurs composants électroniques et/ou mécaniques qu'il est susceptible d'abriter.

Les moyens 1005 de jonction sont un raccord mâle - femelle. A titre d'exemples de raccord mâle - femelle, il peut être citer les ensembles de vis et boulons, les ensembles fiches mâles et femelles, les ensembles queues d'aronde et mortaises, les clips d'assemblage, les ensembles crochets et œillets. De préférence, le raccord mâle - femelle peut former une fixation enclipsable, comme illustré sur les figures. Une fixation enclipsable permet, selon sa configuration, d'obtenir une fixation définitive ou amovible.

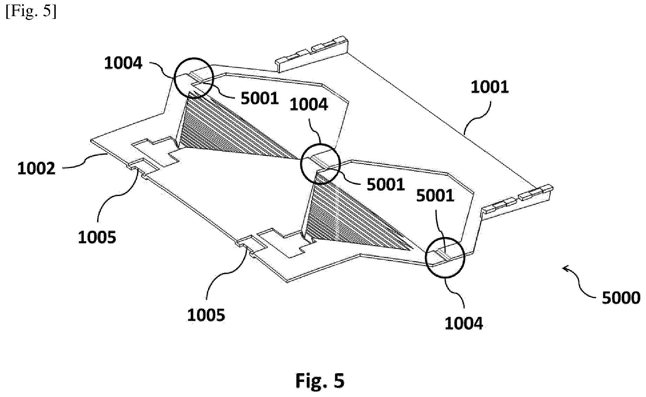

Selon des modes avantageux de réalisation, en référence à la fig. 5, le premier élément 1001 de support, le deuxième élément 1002 de support et la charnière 1004 peuvent être trois parties d'une unique pièce intègre 5000. Autrement dit, le premier élément 1001 de support, le deuxième élément 1002 de support et la charnière 1004 ne forment pas des pièces séparées assemblées entre elles, mais une seule et même pièce 5000 dont la charnière 1004 forme une articulation intégrée aux premier et deuxième éléments 1001, 1002 de support.

Ces modes de réalisation confèrent des avantages certains en terme de fabrication et de conditionnement des supports ajustables 1000 de fixation selon l'invention. Le support ajustable 1000 peut ne requérir que la fabrication de deux pièces : les deux éléments 1001, 1002 de support, d'une part, et le couvercle 1003 de protection, d'autre part - alors que les supports conventionnels de fixation nécessitent la fabrication et l'assemblage complexe d'un plus grand nombre de pièces.

Quant au conditionnement aux fins de stockage et de transport, le fait que le premier élément 1001 de support, le deuxième élément 1002 de support et la charnière 1004 ne forment qu'une unique pièce intègre 5000, permet d'en réduire l'encombrement géométrique, notamment en permettant d'avoir une pièce sensiblement plane lorsque les premier et deuxième éléments 1001, 1002 sont pliés sur eux-mêmes ou complètement dépliés. Un plus grand nombre de supports ajustables 1000 de fixation peuvent alors être conditionnés dans un même espace.

Il est également remarquable que l'assemblage du support ajustable 1000 de fixation est considérablement simplifié car là où les supports de fixation de l'état de la technique nécessitent l'assemblage de plusieurs pièces, notamment plus de trois, les modes de réalisation décrits précédemment ne nécessitent l'assemblage que de deux pièces.

Selon des modes préférés de réalisation, l'unique pièce intègre est une pièce en matière thermoplastique et la charnière 1004 est formée par une zone 5001 de jonction flexible de ladite unique pièce intègre située entre les parties de ladite unique pièce intègre formant les premier et deuxième éléments 1001, 1002 de support. A titre d'exemple, la zone 5001 de jonction flexible peut être obtenu par un amincissement dans l'épaisseur de la pièce dans ladite zone de jonction. L'amincissement peut également être avantageusement tel que deux biseaux soient formés en regard l'un de l'autre de sorte à permettre le repliement des deux parties correspondant aux premier et deuxièmes éléments du support l'un vers l'autre, comme illustré sur la fig. 5.

Selon l'invention, le premier élément 1001 de support est fixe. En particulier, le premier élément 1001 de support peut être destiné à être fixé sur une surface, en particulier sur la surface d'un parebrise. Dans des modes avantageux de réalisation, le premier élément 1001 de support peut présenter une forme permettant d'épouser la courbure du parebrise, les parebrises présentant généralement une certaine courbure.

Dans certains modes de réalisation, le support ajustable 1000 de fixation peut comprendre en outre des cales de renfort d'inclinaison (non représentés) entre le premier élément 1001 de support et le deuxième élément 1002 de support. Des exemples de cale de renfort sont décrites dans les demandes DE10 2010 008 215 A1, WO 2013/070158 A ou EP 2 979 929 A1. Il convient de noter que ces cales de renfort ne sont pas nécessaires pour la mise en œuvre du support de fixation selon l'invention. Elles sont optionnelles. Elles peuvent être utiles dans certaines applications lorsqu'un renfort mécanique quant au maintien de l'angle d'inclinaison est recherché.

Le support ajustable 1000 de fixation selon l'un des quelconques modes de réalisation décrits peut être utilisé pour la fixation de composants électroniques et/ou mécaniques sur un parebrise d'un véhicule, notamment un véhicule automobile.

## Revendications

1. Support ajustable (1000) pour la fixation de composants électroniques et/ou mécaniques sur un parebrise d'un véhicule, ledit support ajustable comprend :
- un premier élément (1001) de support;
- un deuxième élément (1002) de support ;
- un couvercle (1003) de protection des premier et deuxième éléments (1001,1002) de support ;
dans lequel,
- le premier élément (1001) de support est destiné à être fixé sur un parebrise,
- le deuxième élément (1002) de support est connecté au premier élément (1001) de support à l'aide d'une charnière (1004) configurée de manière à permettre la rotation du deuxième élément (1002) de support par rapport au premier élément (1001) de support ;
**caractérisé en ce que**
- le couvercle (1003) de protection et le deuxième élément (1002) de support comprennent respectivement des moyens (1005) de jonction complémentaires de sorte que, lorsque le couvercle (1003) de protection est fixé sur les premier et deuxième éléments (1001, 1002) de support, ces moyens (1005) de jonction permettent de former un angle relatif d'inclinaison entre le deuxième élément (1002) de support et le premier élément (1001) de support,
- les moyens de jonction complémentaires entre le couvercle (1003) de protection et le deuxième élément (1002) de support sont un raccord mâle - femelle.

2. Support (1000) selon la revendication 1, tel que les moyens (1005) de jonction complémentaires sont des moyens amovibles.

3. Support (1000) selon la revendication 1 ou 2, tel que le raccord mâle - femelle forme une fixation enclipsable.

4. Support (1000) selon l'une quelconque des revendication 1 à 3, tel que le premier élément (1001) de support, le deuxième élément (1002) de support et la charnière (1004) sont trois parties d'une unique pièce intègre (5000).

5. Support (1000) selon la revendication 4, tel que l'unique pièce intègre (5000) est une pièce en matière thermoplastique et la charnière est formée par une zone (5001) de jonction flexible de ladite unique pièce intègre (5000) située entre les parties de ladite unique pièce intègre (5000) formant les premier et deuxième éléments (1001,1002) de support.

6. Support (1000) selon l'une quelconque des revendications 1 à 5, tel que le premier élément (1001) de support est destiné être fixé sur une surface, en particulier sur la surface d'un parebrise.

7. Support (1000) selon l'une quelconque des revendications 1 à 6, tel que ledit support (1000) comprend en outre des cales de renfort d'inclinaison entre le premier élément (1001) de support et le deuxième élément (1002) de support.

8. Utilisation d'un support ajustable (1000) selon l'une quelconque des revendications 1 à 7 pour la fixation de composants électroniques et/ou mécaniques sur un parebrise d'un véhicule, notamment un véhicule automobile.

## Patentansprüche

1. Einstellbarer Träger (1000) zur Befestigung elektronischer und/oder mechanischer Komponenten an einer Windschutzscheibe eines Fahrzeugs, wobei der einstellbare Träger umfasst:
- ein erstes Trägerelement (1001);
- ein zweites Trägerelement (1002);
- eine Abdeckung (1003) zum Schutz des ersten und zweiten Trägerelements (1001, 1002);
wobei,
- das erste Trägerelement (1001) zum Befestigen an einer Windschutzscheibe vorgesehen ist,
- das zweite Trägerelement (1002) mit dem ersten Trägerelement (1001) über ein Scharnier (1004) verbunden ist, das so konfiguriert ist, dass es eine Drehung des zweiten Trägerelements (1002) relativ zum ersten Trägerelement (1001) ermöglicht;
**dadurch gekennzeichnet, dass**
- die Schutzabdeckung (1003) und das zweite Trägerelement (1002) jeweils komplementäre Verbindungsmittel (1005) derart umfassen, dass diese Verbindungsmittel (1005), wenn die Schutzabdeckung (1003) an dem ersten und dem zweiten Trägerelement (1001, 1002) befestigt ist, die Bildung eines relativen Neigungswinkels zwischen dem zweiten Trägerelement (1002) und dem ersten Trägerelement (1001) ermöglichen,
- die komplementären Verbindungsmittel zwischen der Schutzabdeckung (1003) und dem zweiten Trägerelement (1002) eine Steckverbindung sind.

2. Träger (1000) nach 1, wobei die komplementären Verbindungsmittel (1005) abnehmbare Mittel sind.

3. Träger (1000) nach 1 oder 2, wobei die Steckverbindung eine Clip-Befestigung bildet.

4. Träger (1000) nach einem der Ansprüche 1 bis 3, wobei das erste Trägerelement (1001), das zweite Trägerelement (1002) und das Scharnier (1004) drei Teile eines einzigen einteiligen Teils (5000) sind.

5. Träger (1000) nach 4, wobei das einzige einteilige Teil (5000) ein Teil aus thermoplastischem Material ist und das Scharnier durch eine biegsame Verbindungszone (5001) des einzigen einteiligen Teils (5000) gebildet wird, die sich zwischen den Teilen des einzigen einteiligen Teils (5000) befindet, das das erste und das zweite Trägerelement (1001, 1002) bildet.

6. Träger (1000) nach einem der Ansprüche 1 bis 5, wobei das erste Trägerelement (1001) zum Befestigen an einer Oberfläche, insbesondere an der Oberfläche einer Windschutzscheibe, vorgesehen ist.

7. Träger (1000) nach einem der Ansprüche 1 bis 6, wobei der Träger (1000) ferner Neigungsverstärkungsunterlagen zwischen dem ersten Trägerelement (1001) und dem zweiten Trägerelement (1002) umfasst.

8. Verwendung eines verstellbaren Trägers (1000) nach einem der Ansprüche 1 bis 7 zur Befestigung elektronischer und/oder mechanischer Komponenten an einer Windschutzscheibe eines Fahrzeugs, insbesondere eines Kraftfahrzeugs.

## Claims

1. An adjustable support (1000) for attaching electronic and/or mechanical components to a windshield of a vehicle, said adjustable support comprising:
- a first support element (1001);
- a second support element (1002);
- a cover (1003) for protecting the first and second support elements (1001, 1002);
wherein
- the first support element (1001) is intended to be attached to a windshield,
- the second support element (1002) is connected to the first support element (1001) by means of a hinge (1004) configured so as to allow the rotation of the second support element (1002) relative to the first support element (1001);
**characterized in that**
- the protective cover (1003) and the second support element (1002) respectively comprise complementary junction means (1005) so that, when the protective cover (1003) is attached to the first and second support elements (1001, 1002), these junction means (1005) make it possible to form a relative angle of inclination between the second support element (1002) and the first support element (1001),
- the junction means between the protective cover (1003) and the second support element (1002) are a male-female connector.

2. The support (1000) according to claim 1, wherein the complementary junction means (1005) are removable means.

3. The support (1000) according to claim 1 or 2, wherein the male-female connector forms a snap-on attachment.

4. The support (1000) according to any one of claims 1 to 3, wherein the first support element (1001), the second support element (1002) and the hinge (1004) are three portions of a single integral part (5000).

5. The support (1000) according to claim 4, wherein the single integral part (5000) is a part made of thermoplastic material and the hinge is formed by a flexible junction zone (5001) of said single integral part (5000) located between the portions of said single integral part (5000) forming the first and second support elements (1001,1002).

6. The support (1000) according to any one of claims 1 to 5, wherein the first support element (1001) is intended to be attached to a surface, in particular to the surface of a windshield.

7. The support (1000) according to any one of claims 1 to 6, wherein said support (1000) further comprises inclination reinforcing shims between the first support element (1001) and the second support element (1002).

8. The use of an adjustable support (1000) according to any one of claims 1 to 7 for attaching electronic and/or mechanical components to a windshield of a vehicle, in particular a motor vehicle.
